# FASCICULE DE BREVET EUROPEEN

(11) **EP 3 754 313 B1**
(45) Date de publication et mention de la délivrance du brevet: **20.08.2025**
(21) Numéro de dépôt: 20179882.4
(22) Date de dépôt: 15.06.2020
(51) Int. Cl.: H04R 1/04, H04R 19/04, H04R 29/00, G01H 3/00

(54) **DISPOSITIF DE MESURE MICROPHONIQUE PORTATIF**
TRAGBARE MIKROFON-MESSVORRICHTUNG
PORTABLE MICROPHONIC MEASURING DEVICE

(30) Priorité: 19.06.2019 FR 1906603
(43) Date de publication de la demande: 23.12.2020
(73) Titulaire: Alliantech, 92230 Gennevilliers (FR)
(72) Inventeur: LEROY, Daniel, 31270 Villeneuve Tolosane (FR)
(74) Mandataire: Demonda, Ghislain

(56) Documents cités:
- US-A1- 2003 091 207
- US-A1- 2011 026 739
- US-A1- 2014 370 855
- US-A1- 2015 281 836
- US-A1- 2016 314 805
- US-A1- 2017 141 811

## Description

L'invention concerne un système comprenant un dispositif de mesure microphonique portatif. Des dispositifs similaires sont connus des documents US2016314805A1, US2015281836A1, US2017141811A1, US2014370855A1, US2003091207A1 et US2011026739A1.

Les dispositifs de mesure microphonique sont utilisés pour mesurer des niveaux sonores pouvant être produits par exemple par des appareils tels que des moteurs, des turbines, des systèmes de conditionnement d'air.

On connaît, notamment du document EP 2 851 884, des systèmes de mesure acoustique comprenant un dispositif de mesure microphonique utilisé en combinaison d'une unité d'acquisition. Le dispositif de mesure microphonique comprend un transducteur électroacoustique adapté pour produire un signal électrique analogique à partir d'ondes acoustiques. Le dispositif de mesure microphonique est relié à l'unité d'acquisition par un câble électriquement conducteur pour pouvoir transmettre le signal électrique analogique à l'unité d'acquisition. Cette unité d'acquisition comprend un boîtier dans lequel sont disposés :
- un amplificateur permettant d'amplifier le signal électrique analogique transmis par le transducteur électroacoustique,
- un convertisseur analogique-numérique relié électriquement à l'amplificateur et adapté pour convertir le signal électrique analogique amplifié en un signal électrique numérique,
- un processeur adapté pour encoder le signal électrique numérique généré par le convertisseur analogique-numérique,
- un dispositif de transmission sans fil adapté pour transmettre le signal numérique encodé produit par le processeur.

En particulier, le dispositif de transmission sans fil permet de transmettre le signal numérique encodé à un dispositif de traitement et d'affichage portatif. Ce dispositif portatif est adapté pour traiter le signal numérique pour calculer des grandeurs acoustiques relatives aux ondes acoustiques captées par le transducteur électroacoustique. Ces grandeurs acoustiques peuvent ensuite être affichées sur un écran du dispositif portatif de façon à pouvoir être visualisées par un utilisateur.

Ce système de mesure acoustique présente l'inconvénient d'utiliser une unité d'acquisition encombrante.

Afin de résoudre cet inconvénient, on connaît également des dispositifs de mesure microphonique intégrant directement une unité d'acquisition. Ces dispositifs de mesure microphonique comprennent ainsi un boîtier dans lequel sont disposés :
- un transducteur électroacoustique adapté pour convertir des ondes acoustiques provenant de l'extérieur du boîtier en un signal électrique analogique,
- un unique convertisseur analogique-numérique relié électriquement au transducteur électroacoustique et adapté pour convertir le signal électrique analogique généré par le transducteur électroacoustique en un signal numérique, et
- une prise USB (acronyme de l'anglais « Universal Serial Bus ») pour pouvoir transmettre le signal numérique à un dispositif de traitement externe et alimenter électriquement le dispositif de mesure microphonique à partir du dispositif de traitement externe.

Le dispositif de traitement externe est adapté pour calculer des grandeurs acoustiques relatives aux ondes acoustiques captées par le transducteur électroacoustique à partir du signal numérique. Ces grandeurs acoustiques peuvent ensuite être affichées par un écran.

Un inconvénient d'un tel dispositif de mesure microphonique est de présenter une dynamique limitée pour éviter l'acquisition de signaux de faible amplitude produits par le transducteur électroacoustique du fait que ces signaux de faible amplitude peuvent être du bruit. En effet, la réalisation d'un conditionnement d'un signal de forte dynamique nécessite des composants électroniques couteux, consommateurs en énergie et délicats à implanter électroniquement.

En particulier, les composants électroniques adaptés pour conditionner un signal de forte dynamique sont adaptés pour mettre en œuvre des algorithmes complexes pour réduire le niveau de bruit dans le signal. En outre, la mise en œuvre de ces algorithmes complexes pour les signaux présentant un niveau sonore important implique une forte consommation d'énergie. La consommation d'énergie de ces composants électroniques peut être incompatible avec la puissance électrique maximum pouvant être délivrée par une connexion USB à partir de certains dispositifs de traitement externe tels que des ordiphones.

L'invention vise à pallier ces inconvénients.

L'invention vise donc à proposer un système comprenant un dispositif de mesure microphonique portatif adapté pour générer des signaux numériques pouvant être transmis à un dispositif de traitement externe, et présentant une dynamique améliorée.

L'invention vise également à proposer un dispositif de mesure microphonique portatif à faible consommation d'énergie.

Selon un premier aspect, l'invention concerne un système comprenant un dispositif de mesure microphonique pour mesurer un signal sonore provenant de l'extérieur du dispositif de mesure microphonique, le dispositif de mesure microphonique étant adapté pour être connecté à un dispositif de traitement externe apte à calculer des grandeurs acoustiques relatives au signal sonore mesuré, le dispositif de mesure microphonique comprenant un boîtier dans lequel sont disposés :
- un transducteur électroacoustique adapté pour convertir des ondes acoustiques provenant de l'extérieur du boîtier en un signal électrique analogique,
- un conditionneur numérique comprenant :
   -- une première voie de mesure comprenant un premier convertisseur analogique-numérique relié électriquement au transducteur électroacoustique et étant adapté pour convertir le signal électrique analogique généré par le transducteur électroacoustique en un premier signal numérique,
   -- au moins un dispositif de transmission dudit premier signal numérique au dispositif de traitement externe,
   -- une deuxième voie de mesure parallèle à la première voie de mesure, la deuxième voie de mesure comprenant un deuxième convertisseur analogique-numérique relié électriquement au transducteur électroacoustique, la deuxième voie de mesure étant amplifiée par rapport à la première voie de mesure de sorte que le deuxième convertisseur analogique-numérique puisse convertir un signal électrique amplifié à partir du signal électrique analogique généré par le transducteur électroacoustique en un deuxième signal numérique,
- un dispositif de traitement externe, distinct du dispositif de mesure.
Le système est caractérisé en ce que, le premier convertisseur analogique numérique et le deuxième convertisseur analogique numérique sont synchrones, et en ce que ledit au moins un dispositif de transmission est adapté pour transmettre ledit deuxième signal numérique au dispositif de traitement externe, et en ce que le dispositif de traitement externe est configuré pour calculer des grandeurs acoustiques relatives au signal sonore mesuré, soit à partir du premier signal numérique, soit à partir du deuxième signal numérique, en fonction du niveau sonore des ondes acoustiques captées par le transducteur électroacoustique.

Le dispositif de transmission est adapté pour pouvoir transmettre ledit premier signal numérique et ledit deuxième signal numérique à un dispositif de traitement externe. Ce dispositif de traitement externe est adapté pour réaliser des mesures acoustiques de dynamique étendue. Par exemple, le dispositif de traitement externe est adapté pour mesurer un spectre d'octave, un spectre de tiers d'octave, un niveau de pression acoustique avec pondération fréquentielle A ou C et temporelle F (« fast ») ou S (« slow »), un niveau sonore continu équivalent de pression acoustique (pondéré A ou C), un niveau de crête de pression acoustique pondérée C.

Le dispositif de traitement externe peut également comprendre un écran permettant d'afficher les grandeurs acoustiques calculées. Par exemple, le dispositif de traitement externe peut être choisi parmi un ordiphone, une tablette numérique et un ordinateur, notamment un ordinateur portable.

Un dispositif de mesure microphonique selon l'invention permet d'obtenir deux voies de mesure :
- une première voie de mesure comprenant le premier convertisseur analogique-numérique et
- une deuxième voie de mesure comprenant le deuxième convertisseur analogique-numérique et étant amplifiée par rapport à la première voie de mesure.

La première voie de mesure peut être utilisée pour convertir les signaux électriques analogiques produits par le transducteur électroacoustique et présentant un niveau de signal sonore important, par exemple compris dans une plage de mesure entre 40dB et 130dB. La deuxième voie de mesure est utilisée pour mesurer les signaux sonores faibles, par exemple compris dans une plage de mesure entre 20dB et 110dB.

La sélection du signal à utiliser parmi les deux voies de mesure selon le niveau sonore est effectuée en aval par le dispositif de traitement externe. En particulier, la première voie de mesure est utilisée lorsque les mesures passant par la deuxième voie de mesure sont saturées.

La deuxième voie permet, en amplifiant les signaux électriques analogiques, de convertir des signaux électriques analogiques de faible amplitude sur une même plage d'amplitudes que celle de la première voie. La deuxième voie permet ainsi d'augmenter la dynamique de la mesure, à savoir la plage de fonctionnement où la mesure est linéaire. Le dispositif de mesure microphonique associé au dispositif de traitement externe permet d'obtenir une grande dynamique sans nécessiter la mise en œuvre d'algorithmes complexes. Bien que deux convertisseurs analogique-numérique soient utilisés, le fait de ne pas mettre en œuvre des algorithmes complexes pour filtrer le bruit permet tout de même de réduire la consommation d'énergie du dispositif de mesure microphonique.

Dans certains modes de réalisation avantageux et selon ce premier aspect de l'invention, un dispositif de transmission est adapté pour pouvoir être connecté par une liaison filaire au dispositif de traitement externe.

Dans certains modes de réalisation avantageux et selon ce premier aspect de l'invention, le dispositif de transmission adapté pour pouvoir être connecté par une liaison filaire au dispositif de traitement externe est également adapté pour pouvoir alimenter électriquement le dispositif de mesure microphonique à partir dudit dispositif de traitement externe.

Dans certains modes de réalisation avantageux et selon ce premier aspect de l'invention, le dispositif de transmission adapté pour pouvoir être connecté par une liaison filaire au dispositif de traitement externe est un connecteur USB - notamment une prise USB-.

Dans certains modes de réalisation avantageux et selon ce premier aspect de l'invention, le premier convertisseur analogique-numérique et le deuxième convertisseur analogique-numérique sont adaptés pour acquérir le signal électronique analogique selon une fréquence d'échantillonnage comprise entre 32 kHz et 192kHz notamment de l'ordre de 48kHz.

Dans certains modes de réalisation avantageux et selon ce premier aspect de l'invention, le premier convertisseur analogique-numérique et le deuxième convertisseur analogique-numérique sont compris dans un même composant électronique. Ce composant électronique est alors un convertisseur analogique-numérique stéréo.

Selon un deuxième aspect de l'invention, l'invention concerne un procédé de traitement d'un flux de données numériques généré par un dispositif de mesure microphonique et représentatif des ondes acoustiques perçues par le dispositif de mesure microphonique, le procédé comprenant :
- une étape d'acquisition par le dispositif de traitement externe du flux de données numériques transmis par le dispositif de transmission, l'acquisition étant effectuée par blocs de données numériques,
- une étape de calcul en continu de grandeurs acoustiques à partir de chaque bloc de données numériques,
- une étape de mesure du temps de calcul des grandeurs acoustiques pour chaque bloc de données numériques,
- une étape de comparaison des temps de calcul mesurés par rapport à une valeur prédéterminée, de sorte que si les temps de calcul mesurés sont supérieurs à cette valeur prédéterminée l'étape d'acquisition du flux de données numériques et l'étape de calcul en continu de grandeurs acoustiques sont stoppées.

Ce deuxième aspect de l'invention peut être combiné au premier aspect de l'invention.

Un tel procédé de traitement est implémenté dans un logiciel d'acquisition et de traitement de flux de données numériques transmis par le dispositif de mesure microphonique. Ce logiciel est installé dans le dispositif de traitement externe.

Le procédé de traitement permet de s'assurer que les ressources du dispositif de traitement externe sont suffisamment disponibles pour que le calcul des grandeurs acoustiques ne soit pas faussé. Par exemple, l'utilisation d'autres logiciels en parallèle du logiciel d'acquisition et de traitement amène à réduire le nombre de ressources disponibles pour l'acquisition et le traitement des données numériques transmises par le dispositif de mesure microphonique. Cette réduction des ressources disponibles peut parfois empêcher le logiciel d'acquisition et de traitement de fonctionner correctement de sorte que les grandeurs acoustiques calculées sont fausses.

De préférence, lorsque les temps de calcul mesurés sont supérieurs à la valeur prédéterminée, un message d'alerte est produit par le dispositif de traitement externe. Par exemple, le message d'alerte peut être sous la forme d'un son émis par le dispositif de traitement externe ou bien par un message affiché sur un écran du dispositif de traitement externe.

De préférence, on compare une moyenne de plusieurs temps de calcul de grandeurs acoustiques à ladite valeur prédéterminée.

Par exemple, l'acquisition est réalisée par bloc de 200ms de signal.

Par ailleurs, lorsque le dispositif de traitement externe ne possède pas suffisamment de ressources pour le logiciel d'acquisition et de traitement, il existe un risque de perte de bloc(s) de données. En particulier, cette perte de bloc(s) de données est due au délai entre un instant lors duquel un bloc de données est acquis à l'aide d'un programme d'acquisition et un instant lors duquel ce bloc de données acquis est utilisé lors de ladite étape de calcul par un programme de traitement du logiciel du dispositif de traitement externe.

Le logiciel d'acquisition et de traitement met en œuvre un procédé permettant de détecter une perte de bloc(s) de sorte que lorsqu'une perte de bloc(s) de données est détectée, le logiciel d'acquisition et de traitement arrête l'acquisition en cours, enregistre les données acquises puis démarre une nouvelle acquisition. En particulier, le programme d'acquisition transmet un indicateur de discontinuité au programme de traitement lorsque le temps de prise en charge d'un bloc de données est supérieur à une valeur prédéterminée.

Selon un exemple ne faisant pas partie de la présente invention, il est décrit un dispositif de mesure microphonique comprenant un boîtier dans lequel est disposé :
- un transducteur électroacoustique capacitif adapté pour convertir des ondes acoustiques provenant de l'extérieur du boîtier en un signal électrique analogique,
caractérisé en ce qu'il comprend un générateur d'ondes mécaniques adapté pour transmettre lesdites ondes mécaniques au transducteur électroacoustique de façon à modifier la capacité du transducteur électroacoustique.

Ce exemple peut être combiné au premier aspect de l'invention et/ou au deuxième aspect de l'invention.

Les ondes mécaniques peuvent être des ondes sonores ou bien des ondes vibratoires. En particulier, les ondes vibratoires peuvent être transmises au transducteur électroacoustique via le boîtier.

Dans certains modes de réalisation, le boîtier comprend deux parties assemblées l'une à l'autre de façon amovible. Une première partie du boîtier comprend alors une paroi délimitant un logement dans lequel est disposé un transducteur électroacoustique. Une deuxième partie du boîtier comprend une paroi délimitant une enceinte contenant le générateur d'ondes mécaniques. Dans ces modes de réalisation, lorsque les ondes mécaniques générées sont des ondes sonores, la paroi de la deuxième partie du boîtier et celle de la première partie du boîtier présentent des orifices agencés de façon à permettre le passage des ondes sonores depuis le générateur d'ondes sonores jusqu'au transducteur électroacoustique.

Avantageusement et selon cet exemple, le dispositif de mesure microphonique est adapté pour faire communiquer le générateur d'ondes mécaniques à une unité de contrôle. L'unité de contrôle peut être intégrée au dispositif de mesure microphonique. En particulier, l'unité de contrôle peut être disposée dans ledit boîtier. En variante, l'unité de contrôle peut être externe audit dispositif de mesure microphonique.

Un dispositif de mesure microphonique selon cet exemple permet de vérifier la réponse du transducteur électroacoustique en excitant ce dernier avec des ondes mécaniques prédéfinies générées par ledit générateur d'ondes mécaniques.

Avantageusement, le dispositif de mesure microphonique est adapté pour pouvoir faire communiquer le générateur d'ondes mécaniques avec un dispositif de traitement externe. Le dispositif de traitement externe permet d'analyser la réponse du transducteur électroacoustique aux excitations réalisées à l'aide du générateur d'ondes mécaniques. Ainsi, le dispositif de traitement externe permet de vérifier si la réponse du transducteur électroacoustique est conforme aux ondes mécaniques prédéfinies.

Cette vérification peut être utilisée avant chaque utilisation du dispositif de mesure microphonique.

L'invention concerne également système comprenant un dispositif de mesure microphonique et un dispositif de traitement externe caractérisé, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention, qui est uniquement définie par les revendications annexées, pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
- la figure 1 est un schéma synoptique d'un dispositif de mesure microphonique selon un mode de réalisation de l'invention,
- la figure 2 est une vue en perspective d'un dispositif de mesure microphonique selon un mode de réalisation de l'invention, le dispositif de mesure microphonique étant relié à un dispositif de traitement externe.

Un dispositif 10 de mesure microphonique représenté sur les figures selon un mode de réalisation de l'invention comprend un boîtier 11 de dimensions adaptées pour pouvoir être tenu par une seule main. Le boîtier 11 comprend deux parties 12, 13 assemblées l'une à l'autre de façon amovible.

Une première partie 12 du boîtier 11 comprend une paroi délimitant un logement dans lequel est disposé un transducteur 14 électroacoustique adapté pour convertir des ondes acoustiques provenant de l'extérieur du boîtier 11 en un signal électrique analogique. Par exemple, le transducteur 14 électroacoustique est un transducteur électroacoustique capacitif adapté pour convertir les ondes acoustiques en signal électrique à l'aide d'un condensateur comprenant une membrane pouvant être déplacée par lesdites ondes acoustiques de façon à modifier une capacité électrique du transducteur 14 électronique.

La paroi de la première partie 12 du boîtier 11 comprend des fentes 24 permettant la diffusion des ondes acoustiques jusqu'au transducteur 14 électroacoustique. Le transducteur 14 électroacoustique est de préférence omnidirectionnel.

Le boîtier du dispositif 10 de mesure microphonique présente une forme adaptée pour ne pas provoquer de réflexion des ondes acoustiques vers le transducteur 14 électroacoustique.

Une deuxième partie 13 du boîtier 11 forme une enceinte contenant un conditionneur 27 numérique. Le conditionneur 27 numérique comprend un préamplificateur 26, un premier convertisseur 15 analogique-numérique, un deuxième convertisseur 18 analogique-numérique, un dispositif 21 de transmission et des amplificateurs 16, 19.

Lorsque la première partie 12 du boîtier 11 est assemblée à la deuxième partie 13 du boîtier 11, le préamplificateur 26 est relié électriquement au transducteur 14 électroacoustique pour amplifier le signal électrique émis par le transducteur 14 électroacoustique.

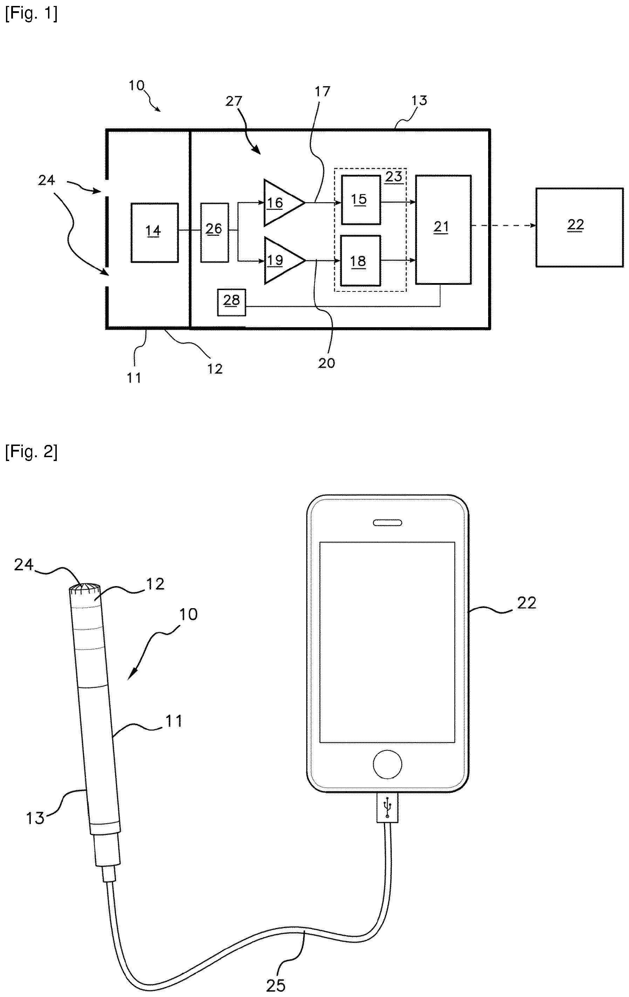

Lorsque la première partie 12 du boîtier 11 est assemblée à la deuxième partie 13 du boîtier 11, le premier convertisseur 15 analogique-numérique est relié électriquement au transducteur 14 électroacoustique par l'intermédiaire du préamplificateur 26 formant ainsi une première voie 17 de mesure. En particulier, le premier convertisseur 15 analogique-numérique est adapté pour convertir le signal électrique analogique généré par le transducteur 14 électroacoustique en un premier signal numérique. Dans le mode de réalisation représenté à la figure 1, le premier convertisseur 15 analogique-numérique est relié au transducteur 14 électroacoustique par l'intermédiaire d'un amplificateur 16 adapté pour atténuer le signal électrique analogique généré par le transducteur 14 électroacoustique.

Lorsque la première partie 12 du boîtier 11 est assemblée à la deuxième partie 13 du boîtier 11, le deuxième convertisseur 18 analogique-numérique est relié électriquement au transducteur 14 électroacoustique par l'intermédiaire de l'amplificateur 19 et du préamplificateur 26 formant ainsi une deuxième voie 20 de mesure. En particulier, la première voie 17 de mesure est parallèle à la deuxième voie 20 de mesure. L'amplificateur 19 est adapté pour produire un signal électrique amplifié à partir du signal électrique analogique généré par le transducteur 14 électroacoustique par rapport au signal électrique en sortie de l'amplificateur 16. Ainsi, la deuxième voie 20 de mesure est amplifiée par rapport à la première voie 17 de mesure. Le deuxième convertisseur 18 analogique-numérique est adapté pour convertir le signal électrique amplifié produit par cet amplificateur 19 en un deuxième signal numérique.

Un dispositif 10 de mesure microphonique comprend ainsi deux voies de mesure :
- une première voie 17 de mesure comprenant le premier convertisseur 15 analogique-numérique et l'amplificateur 16, et
- une deuxième voie 20 de mesure comprenant l'amplificateur 19 et le deuxième convertisseur 18 analogique-numérique.

La deuxième voie 20 permet, en amplifiant les signaux électriques analogiques, de convertir des signaux électriques analogiques de faible amplitude sur une même plage d'amplitudes que celle de la première voie 17.

De préférence, le premier convertisseur 15 analogique-numérique et le deuxième convertisseur 18 analogique-numérique sont adaptés pour acquérir le signal électronique analogique produit par le transducteur 14 électroacoustique selon une fréquence d'échantillonnage comprise entre 32 kHz et 192kHz notamment de l'ordre de 48kHz.

Le premier convertisseur 15 analogique-numérique et le deuxième convertisseur 18 analogique-numérique sont synchrones.

Préférentiellement, le premier convertisseur 15 analogique-numérique et le deuxième convertisseur 18 analogique-numérique sont compris dans un même composant 23 électronique. Un tel composant 23 électronique est peu couteux et facile à installer dans le dispositif 10 de mesure microphonique.

Le dispositif 21 de transmission est adapté pour pouvoir transmettre ledit premier signal numérique et ledit deuxième signal numérique à un dispositif 22 de traitement externe. Le dispositif 21 de transmission peut être adapté pour transmettre le signal numérique par une liaison sans-fil, notamment radiofréquence (Wi-Fi^{®}, Bluetooth^{®}...) ou bien par une liaison 25 filaire (notamment USB) comme représenté à la figure 2. En particulier, dans le cas d'une liaison filaire, le dispositif 21 de transmission est non seulement adapté pour transmettre le premier signal numérique et le deuxième signal numérique au dispositif 22 de traitement externe, mais est aussi utilisé pour alimenter en énergie le dispositif 10 de mesure microphonique à partir du dispositif 22 de traitement externe. En particulier, le premier convertisseur 15 analogique-numérique, le deuxième convertisseur 18 analogique-numérique et les amplificateurs 16, 19 sont alors alimentés électriquement par le dispositif 21 de transmission à partir du dispositif 22 de traitement externe. Il est également possible de prévoir en combinaison ou non d'une alimentation par liaison filaire un accumulateur électrique dans le dispositif 10 de mesure microphonique.

De préférence, le dispositif 21 de transmission est un connecteur USB, notamment une prise USB.

En variante rien n'empêche de prévoir un dispositif de mesure microphonique comprenant un dispositif de transmission filaire et un dispositif de transmission sans fil.

Le dispositif 22 de traitement externe est adapté pour calculer des grandeurs acoustiques relatives aux ondes sonores captées par le transducteur 14 électroacoustique (par exemple le spectre sonore des ondes sonores captées par le transducteur électroacoustique) à partir du premier signal numérique et du deuxième signal numérique transmis par le dispositif 21 de transmission. En particulier, le dispositif 22 de traitement externe comprend un logiciel d'acquisition et de traitement adapté pour calculer des grandeurs acoustiques à partir des signaux numériques transmis par le dispositif 21 de transmission du dispositif 10 de mesure microphonique. Le dispositif 22 de traitement externe peut être adapté pour stocker en mémoire les grandeurs acoustiques calculées. Le dispositif 22 de traitement externe peut également comprendre un écran permettant d'afficher les grandeurs acoustiques calculées pour permettre à un utilisateur de les visualiser. De préférence, le dispositif 22 de traitement externe est portatif afin de pouvoir être transporté facilement. Par exemple, le dispositif 22 de traitement peut être choisi parmi un ordiphone, une tablette numérique et un ordinateur portable.

Selon l'invention, le dispositif 22 de traitement externe est adapté pour calculer des grandeurs acoustiques soit à partir dudit premier signal numérique soit à partir dudit deuxième signal numérique en fonction du niveau sonore des ondes acoustiques captées par le transducteur électroacoustique. En particulier, le dispositif 22 de traitement externe calcule des grandeurs acoustiques à partir du premier signal numérique lorsque le niveau sonore est élevé. Par exemple, le dispositif 22 de traitement externe calcule des grandeurs acoustiques à partir du premier signal numérique lorsque le niveau sonore est supérieur à 110dB(A). En outre, le dispositif 22 de traitement externe calcule des grandeurs acoustiques à partir du deuxième signal numérique lorsque le niveau sonore est faible. Par exemple, le dispositif 22 de traitement externe calcule des grandeurs acoustiques à partir du deuxième signal numérique lorsque le niveau sonore est inférieur ou égal à 110dB(A).

En particulier, le dispositif 22 de traitement externe calcule des grandeurs acoustiques à partir du deuxième signal numérique lorsque ce deuxième signal électrique n'est pas saturé. Lorsque le deuxième signal électrique est saturé, le dispositif 22 de traitement externe calcule des grandeurs acoustiques à partir du premier signal numérique.

Ainsi, un dispositif 10 de mesure microphonique selon l'invention permet d'améliorer la dynamique du dispositif 10 de mesure microphonique en utilisant le signal numérique issu du signal amplifié de la deuxième voie 20 lorsque le niveau sonore est faible. Un dispositif 10 de mesure microphonique présente alors une grande dynamique sans nécessiter la mise en œuvre d'algorithmes complexes. La grande dynamique obtenue du dispositif 10 de mesure microphonique permet au dispositif 10 de mesure microphonique d'être utilisé comme dispositif 10 de mesure microphonique.

Le fait de ne pas mettre en œuvre des algorithmes complexes pour filtrer le bruit permet également de réduire la consommation d'énergie du dispositif 10 de mesure microphonique. Ainsi, le fonctionnement du dispositif 10 de mesure microphonique ne nécessite pas de puiser une grande quantité d'énergie dans le dispositif 22 de traitement externe ou dans l'accumulateur du dispositif 10 de mesure microphonique. Cet avantage est important lorsque le dispositif 10 de mesure microphonique est alimenté par un accumulateur ou bien un dispositif 22 de traitement externe portatif tel qu'un ordiphone, une tablette ou un ordinateur portable qui ne peuvent accumuler qu'une quantité limitée d'énergie.

Par ailleurs, le dispositif 10 de mesure microphonique comprend également un générateur 28 d'ondes mécaniques adapté pour transmettre lesdites ondes mécaniques au transducteur 14 électroacoustique de façon à modifier la capacité du transducteur 14 électroacoustique capacitif. Le générateur 28 d'ondes mécaniques est disposé dans la deuxième partie 13 du boîtier 11.

Les ondes mécaniques générées par ledit générateur 28 d'ondes mécaniques peuvent être des ondes sonores ou bien des ondes vibratoires. En particulier, les ondes vibratoires peuvent être transmises au transducteur 14 électroacoustique via le boîtier 11. En outre, lorsque les ondes mécaniques générées sont des ondes sonores, la paroi de la deuxième partie 13 du boîtier 11 et celle de la première partie 12 du boîtier 11 présentent des orifices agencés de façon à permettre le passage des ondes sonores depuis le générateur 28 d'ondes sonores jusqu'au transducteur 14 électroacoustique.

Une unité de contrôle est utilisée pour contrôler le générateur 28 d'ondes mécaniques. L'unité de contrôle peut être intégrée au dispositif 10 de mesure microphonique et disposée dans ledit boîtier 11 ou bien externe audit dispositif 10 de mesure microphonique. En particulier, l'unité de contrôle peut être le dispositif 22 de traitement externe. L'unité de contrôle communique alors avec le générateur d'ondes mécaniques par l'intermédiaire du dispositif 21 de transmission.

Le dispositif de 22 traitement externe permet également d'analyser la réponse du transducteur 14 électroacoustique aux excitations réalisées à l'aide du générateur 28 d'ondes mécaniques. Ainsi, le dispositif 22 de traitement externe permet de vérifier si la réponse du transducteur 14 électroacoustique est conforme aux ondes mécaniques prédéfinies générées par le générateur 28 d'ondes mécaniques.

Cette vérification peut être utilisée avant chaque utilisation du dispositif 10 de mesure microphonique.

Par ailleurs, afin d'obtenir des grandeurs acoustiques fiables, le dispositif 22 de traitement externe met en œuvre un procédé de traitement tel que décrit ci-dessous.

Lors du fonctionnement du dispositif 10 de mesure microphonique, le dispositif 21 de transmission transmet au dispositif 22 de traitement externe un flux de données numériques représentatif des ondes acoustiques perçues par le transducteur 14 électroacoustique. Le procédé de traitement comprend alors une étape d'acquisition par le dispositif de traitement externe du flux de données numériques transmis par le dispositif de traitement externe. Cette acquisition s'effectue par blocs de données numériques. Par exemple, l'acquisition est réalisée par blocs de 200ms de signal.

Le procédé de traitement comprend également une étape de calcul en continu de grandeurs acoustiques à partir de chaque bloc de données numériques. Le calcul des grandeurs acoustiques d'un bloc de données numériques s'effectue après acquisition de ce bloc de données numériques. L'étape de calcul en continu s'effectue en parallèle de l'étape d'acquisition du flux de données numériques.

Le procédé de traitement comprend également une étape de mesure du temps de calcul des grandeurs acoustiques pour chaque bloc de données numériques puis une étape de comparaison des temps de calcul mesurés par rapport à une valeur prédéterminée. De préférence, on compare une moyenne de plusieurs temps de calcul de grandeurs acoustiques à ladite valeur prédéterminée. Si les temps de calcul mesurés sont supérieurs à ladite valeur prédéterminée, l'étape d'acquisition du flux de données numériques et l'étape de calcul en continu de grandeurs acoustiques sont stoppées.

Un tel procédé de traitement est implémenté dans le logiciel d'acquisition et de traitement installé dans le dispositif de traitement externe.

Le procédé de traitement permet de s'assurer que les ressources du dispositif de traitement externe sont suffisamment disponibles pour que le calcul des grandeurs acoustiques ne soit pas faussé. Par exemple, l'utilisation d'autres logiciels en parallèle du logiciel d'acquisition et de traitement amène à réduire le nombre de ressources disponibles pour l'acquisition et le traitement des données numériques transmises par le dispositif de mesure microphonique. Cette réduction des ressources disponibles peut parfois empêcher le logiciel d'acquisition et de traitement de fonctionner correctement de sorte que les grandeurs acoustiques calculées sont fausses.

De préférence, lorsque les temps de calcul mesurés sont supérieurs à la valeur prédéterminée, un message d'alerte est produit par le dispositif de traitement externe. Par exemple, le message d'alerte peut être sous la forme d'un son émis par le dispositif de traitement externe ou bien par un message affiché sur un écran du dispositif de traitement externe.

Par ailleurs, lorsque le dispositif 22 de traitement externe ne possède pas suffisamment de ressources pour le logiciel d'acquisition et de traitement, il existe un risque de perte de bloc(s) de données. En particulier, cette perte de bloc(s) de données est due au délai entre un instant lors duquel un bloc de données est acquis à l'aide d'un programme d'acquisition et un instant lors duquel ce bloc de données acquis est utilisé lors de ladite étape de calcul par un programme de traitement du logiciel du dispositif de traitement externe.

Le logiciel d'acquisition et de traitement met en œuvre un procédé permettant de détecter une perte de bloc(s) de sorte que lorsqu'une perte de bloc(s) de données est détectée, le logiciel d'acquisition et de traitement arrête l'acquisition en cours, enregistre les données acquises puis démarre une nouvelle acquisition. En particulier, le programme d'acquisition transmet un indicateur de discontinuité au programme de traitement lorsque le temps de prise en charge d'un bloc de données est supérieur à une valeur prédéterminée.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente, la présente invention étant uniquement définie par les revendications annexées.

## Revendications

1. Système comprenant :
- un dispositif (10) de mesure microphonique pour mesurer un signal sonore provenant de l'extérieur du dispositif de mesure microphonique, le dispositif de mesure microphonique,
-- étant adapté pour être connecté à un dispositif (22) de traitement externe adapté pour calculer des grandeurs acoustiques relatives au signal sonore mesuré,
-- comprenant un boîtier (11) dans lequel sont disposés :
--- un transducteur (14) électroacoustique adapté pour convertir des ondes acoustiques provenant de l'extérieur du boîtier (11) en un signal électrique analogique,
--- un conditionneur (27) numérique comprenant :
---- une première voie (17) de mesure comprenant un premier convertisseur (15) analogique-numérique relié électriquement au transducteur électroacoustique et étant adapté pour convertir le signal électrique analogique généré par le transducteur électroacoustique en ledit premier signal numérique,
---- au moins un dispositif (21) de transmission dudit premier signal numérique au dispositif (22) de traitement externe,
---- une deuxième voie (20) de mesure parallèle à la première voie (17) de mesure, la deuxième voie (20) de mesure comprenant un deuxième convertisseur (18) analogique-numérique relié électriquement au transducteur électroacoustique, la deuxième voie (20) de mesure étant amplifiée par rapport à la première voie de mesure de sorte que le deuxième convertisseur (18) analogique-numérique puisse convertir un signal électrique amplifié à partir du signal électrique analogique généré par le transducteur électroacoustique en ledit deuxième signal numérique,
- un dispositif (22) de traitement externe, distinct du dispositif de mesure le système étant **caractérisé en ce que**,
- le premier convertisseur (15) analogique numérique et le deuxième convertisseur (18) analogique numérique sont synchrones,
- ledit au moins un dispositif (21) de transmission est adapté pour transmettre ledit deuxième signal numérique au dispositif (22) de traitement externe, et
- le dispositif (22) de traitement externe est configuré pour calculer des grandeurs acoustiques relatives au signal sonore mesuré, soit à partir du premier signal numérique, soit à partir du deuxième signal numérique, en fonction du niveau sonore des ondes acoustiques captées par le transducteur électroacoustique.

2. Système selon la revendication 1, **caractérisé en ce que** le dispositif (21) de transmission est adapté pour pouvoir être connecté par une liaison (25) filaire au dispositif (22) de traitement externe.

3. Système selon la revendication 2, **caractérisé en ce que** le dispositif (21) de transmission adapté pour pouvoir être connecté par une liaison (25) filaire à un dispositif (22) de traitement externe est également adapté pour pouvoir alimenter électriquement le dispositif de mesure microphonique à partir dudit dispositif (22) de traitement externe.

4. Système selon l'une quelconque des revendications 2 ou 3, **caractérisé en ce que** le dispositif (21) de transmission adapté pour pouvoir être connecté par une liaison (25) filaire à un dispositif (22) de traitement externe est un connecteur USB -notamment une prise USB-.

5. Système selon l'une des revendications 1 à 4, **caractérisé en ce que** le premier convertisseur (15) analogique-numérique et le deuxième convertisseur (18) analogique-numérique sont adaptés pour acquérir le signal électronique analogique selon une fréquence d'échantillonnage comprise entre 32 kHz et 192kHz.

6. Système selon l'une des revendications 1 à 5, **caractérisé en ce que** le premier convertisseur (15) analogique-numérique et le deuxième convertisseur (18) analogique-numérique sont compris dans un même composant électronique.

7. Système selon l'une des revendications 1 à 6, dans lequel, le dispositif (22) de traitement externe est configuré pour calculer des grandeurs acoustiques relatives au signal sonore mesuré, soit à partir du premier signal numérique, soit à partir du deuxième signal numérique, lorsque le niveau sonore des ondes acoustiques captées par le transducteur électroacoustique se trouve au-delà d'un seuil prédéterminé.

## Patentansprüche

1. System, umfassend:
- eine Mikrofonmessvorrichtung (10) zum Messen eines von außerhalb der Mikrofonmessvorrichtung kommenden Tonsignals, wobei die Mikrofonmessvorrichtung
-- zum Anschluss an eine externe Verarbeitungsvorrichtung (22) geeignet ist, die geeignet ist, akustische Größen in Bezug auf das gemessene Tonsignal zu berechnen,
-- ein Gehäuse (11) umfasst, in dem angeordnet sind:
--- ein elektroakustischer Wandler (14), der geeignet ist, von außerhalb des Gehäuses (11) kommende Schallwellen in ein analoges elektrisches Signal umzuwandeln,
**---** ein digitaler Konditionierer (27), der umfasst:
---- einen ersten Messkanal (17), der einen ersten Analog-Digital-Wandler (15) umfasst, der elektrisch mit dem elektroakustischen Wandler verbunden und geeignet ist, das vom elektroakustischen Wandler erzeugte analoge elektrische Signal in das erste digitale Signal umzuwandeln,
---- mindestens eine Vorrichtung (21) zur Übertragung des ersten digitalen Signals an die externe Verarbeitungsvorrichtung (22),
---- einen zweiten Messkanal (20) parallel zum ersten Messkanal (17), wobei der zweite Messkanal (20) einen zweiten Analog-Digital-Wandler (18) umfasst, der elektrisch mit dem elektroakustischen Wandler verbunden ist, wobei der zweite Messkanal (20) in Bezug auf den ersten Messkanal derart verstärkt wird, dass der zweite Analog-Digital-Wandler (18) ein verstärktes elektrisches Signal aus dem vom elektroakustischen Wandler erzeugten analogen elektrischen Signal in ein zweites digitales Signal umwandeln kann,
- eine externe Verarbeitungsvorrichtung (22), die von der Messvorrichtung verschieden ist,
wobei das System **dadurch gekennzeichnet ist, dass**
- der erste Analog-Digital-Wandler (15) und der zweite Analog-Digital-Wandler (18) synchron sind,
- die mindestens eine Übertragungsvorrichtung (21) geeignet ist, das zweite digitale Signal an die externe Verarbeitungsvorrichtung (22) zu übertragen, und
- die externe Verarbeitungsvorrichtung (22) zur Berechnung akustischer Größen ausgelegt ist, die sich auf das gemessene Tonsignal beziehen, entweder aus dem ersten digitalen Signal oder aus dem zweiten digitalen Signal, in Abhängigkeit vom Schallpegel der von dem elektroakustischen Wandler aufgenommenen Schallwellen.

2. System nach Anspruch 1, **dadurch gekennzeichnet, dass** die Übertragungsvorrichtung (21) zur Verbindung über eine drahtgebundene Verbindung (25) mit der externen Verarbeitungsvorrichtung (22) geeignet ist.

3. System nach Anspruch 2, **dadurch gekennzeichnet, dass** die Übertragungsvorrichtung (21), die zur Verbindung über eine drahtgebundene Verbindung (25) mit einer externen Verarbeitungsvorrichtung (22) geeignet ist, ebenfalls geeignet ist, die Mikrofonmessvorrichtung ab der externen Verarbeitungsvorrichtung (22) mit Strom zu versorgen.

4. System nach einem der Ansprüche 2 oder 3, **dadurch gekennzeichnet, dass** die Übertragungsvorrichtung (21), die zur Verbindung über eine drahtgebundene Verbindung (25) mit einer externen Verarbeitungsvorrichtung (22) geeignet ist, ein USB-Verbinder - insbesondere eine USB-Buchse - ist.

5. System nach einem der Ansprüche 1 bis 4, **dadurch gekennzeichnet, dass** der erste Analog-Digital-Wandler (15) und der zweite Analog-Digital-Wandler (18) zur Erfassung des analogen elektronischen Signals gemäß einer Samplingfrequenz zwischen 32 kHz und 192 kHz geeignet sind.

6. System nach einem der Ansprüche 1 bis 5, **dadurch gekennzeichnet, dass** der erste Analog-Digital-Wandler (15) und der zweite Analog-Digital-Wandler (18) in ein und demselben elektronischen Bauteil enthalten sind.

7. System nach einem der Ansprüche 1 bis **6,** wobei die externe Verarbeitungsvorrichtung (22) zur Berechnung der akustischen Größen ausgelegt ist, die sich auf das gemessene Tonsignal beziehen, entweder aus dem ersten digitalen Signal oder aus dem zweiten digitalen Signal, wenn der Schallpegel der vom elektroakustischen Wandler aufgenommenen Schallwellen jenseits eines vorgegebenen Schwellenwerts liegt.

## Claims

1. A system comprising:
- a microphonic measuring device (10) for measuring a sound signal coming from outside the microphonic measuring device, the microphonic measuring device,
-- being suitable for being connected to an external processing device (22) suitable for calculating acoustic variables relating to the measured sound signal,
**--** comprising a housing (11) in which are disposed:
--- an electroacoustic transducer (14) suitable for converting acoustic waves from outside the housing (11) into an analogue electrical signal,
--- a digital conditioner (27) comprising:
---- a first measurement channel (17) comprising a first analogue-to-digital converter (15) electrically connected to the electroacoustic transducer and being suitable for converting the analogue electrical signal generated by the electroacoustic transducer into said first digital signal,
---- at least one device (21) for transmitting said first digital signal to the external processing device (22),
---- a second measurement channel (20) parallel to the first measurement channel (17), the second measurement channel (20) comprising a second analogue-to-digital converter (18) electrically connected to the electroacoustic transducer, the second measurement channel (20) being amplified relative to the first measurement channel so that the second analogue-to-digital converter (18) can convert an amplified electrical signal from the analogue electrical signal generated by the electroacoustic transducer into said second digital signal,
- an external processing device (22), distinct from the measuring device, the system being **characterised in that**,
- the first analogue-to-digital converter (15) and the second analogue-to-digital converter (18) are synchronous,
- said at least one transmission device (21) is suitable for transmitting said second digital signal to the external processing device (22), and
- the external processing device (22) is configured to calculate acoustic variables relating to the measured sound signal, either from the first digital signal or from the second digital signal, as a function of the sound level of the acoustic waves picked up by the electroacoustic transducer.

2. The system according to claim 1, **characterised in that** the transmission device (21) is suitable for being connected via a wired connection (25) to the external processing device (22).

3. The system according to claim 2, **characterised in that** the transmission device (21) suitable for being able to be connected via a wired connection (25) to an external processing device (22) is also suitable for being able to electrically power the microphonic measuring device from said external processing device (22).

4. The system according to any one of claims 2 or 3, **characterised in that** the transmission device (21) suitable for being able to be connected via a wired connection (25) to an external processing device (22) is a USB connector, in particular a USB socket.

5. The system according to one of claims 1 to 4, **characterised in that** the first analogue-to-digital converter (15) and the second analogue-to-digital converter (18) are suitable for acquiring the analogue electronic signal at a sampling frequency of between 32 kHz and 192 kHz.

6. The system according to one of claims 1 to 5, **characterised in that** the first analogue-to-digital converter (15) and the second analogue-to-digital converter (18) are included in the same electronic component.

7. The system according to one of claims 1 to 6, wherein the external processing device (22) is configured to calculate acoustic variables relating to the measured sound signal, either from the first digital signal or from the second digital signal, when the sound level of the acoustic waves picked up by the electroacoustic transducer is above a predetermined threshold.
